# EUROPEAN PATENT SPECIFICATION

(11) **EP 3 041 205 B1**
(45) Date of publication and mention of the grant of the patent: **12.12.2018**
(21) Application number: 15202107.7
(22) Date of filing: 22.12.2015
(51) Int. Cl.: H04M 1/725, H04L 12/58, G06F 17/21, G06F 3/0484

(54) **METHOD, DEVICE AND SYSTEM FOR DISPLAYING CONTENT OF SHORT MESSAGE, METHOD AND DEVICE FOR DETERMINING DISPLAY OF SHORT MESSAGE**
VERFAHREN, VORRICHTUNG UND SYSTEM ZUM ANZEIGEN VON INHALT EINER KURZNACHRICHT, VERFAHREN UND VORRICHTUNG ZUR BESTIMMUNG DER ANZEIGE EINER KURZNACHRICHT
PROCÉDÉ, DISPOSITIF ET SYSTÈME POUR AFFICHER UN CONTENU DE MESSAGE COURT, PROCÉDÉ ET DISPOSITIF DE DÉTERMINATION D'AFFICHAGE DE MESSAGE COURT

(30) Priority: 05.01.2015 CN 201510004913
(43) Date of publication of application: 06.07.2016
(73) Proprietor: Xiaomi Inc., Beijing 100085 (CN)
(72) Inventor: LIU, Yuxiang, 100085 BEIJING (CN); ZHAO, Zhenhai, 100085 BEIJING (CN); WANG, Pingze, 100085 BEIJING (CN); ZHAO, Anting, 100085 BEIJING (CN); WANG, Bin, 100085 BEIJING (CN); ZHANG, Bo, 100085 BEIJING (CN); SUN, Mingze, 100085 BEIJING (CN)
(74) Representative: Perrot, Emilie

(56) References cited:
- EP-A1- 1 705 881
- DE-A1- 10 325 242
- US-A1- 2008 045 252
- US-A1- 2008 305 815

## Description

### TECHNICAL FIELD

The present invention relates to the field of communication technologies, and more particularly, to a method, a device and a system for displaying content of a short message, and a method and a device for determining a display of a short message.

### BACKGROUND

The short message, as an information transfer mode, realizes a peer to peer (P2P) communication function and a business to customer (B2C) notification function. In the related art, the short message, as a medium of transferring a text or a photograph, transfers attached meanings or instructions to a user via the content of the short message, for example, an operator sends a short message reminder indicating that "the balance in the mobile is insufficient, please prepay" to the user. After the user receives the short message reminder, he/she needs to exit the short message, and further performs a corresponding prepaying operation to prepay for the mobile. The single displaying style of the short message in the related art results in a poor user experience of using the short message.

US2008045252A1 discloses a method for displaying a background picture of a Short Message Service (SMS) message and a terminal thereof. EP1705881A1 discloses a mobile communication terminal and a method for display an idle screen message. US2008305815A1 discloses a system and method for interacting with an interactive communication system include processing a profile associated with an interactive communication system; generating a user interface based on the processing of the profile to solicit a user response correlating to a response required by the interactive communication system; receiving the user response via the user interface; updating the user interface using the profile based on the user response; and sending a signal to the interactive communication system based on one or more user responses.

### SUMMARY

In order to overcome problems existing in the related art, embodiments of the present invention provide a method, a device and a system for displaying content of a short message, and a method and a device for determining a display of a short message, so as to improve the diversification of displaying the short message.

The invention is set out in the appended claims.

In a particular embodiment, the steps of the method for displaying content of a short message are determined by computer program instructions.

Consequently, the invention is also directed to a computer program for executing the steps of a method for displaying content of a short message as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided in embodiments of the present invention may have advantageous effects as follows. The displaying style of displaying the content of the short message in the short message application of the terminal is determined from the short message displaying rule database according to the telephone number and the content of the short message, and the content of the short message is displayed in the short message application according to the displaying style, so that the content of the short message may be displayed in diverse ways in the terminal.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1A is a flow chart showing a method for displaying content of a short message according to an example embodiment.
Fig. 1B is a schematic diagram illustrating a short message displayed in a short message application according to an example embodiment.
Fig. 1C is another schematic diagram illustrating a short message displayed in a short message application according to an example embodiment.
Fig. 2A is a flow chart showing a method for displaying content of a short message according to a first example embodiment.
Fig. 2B is a schematic diagram illustrating a short message displayed in a short message application according to a first example embodiment.
Fig. 2C is another schematic diagram illustrating a short message displayed in a short message application according to a first example embodiment.
Fig. 3A is a flow chart showing a method for displaying content of a short message according to a second example embodiment.
Fig. 3B is a schematic diagram illustrating a short message displayed in a short message application according to a second example embodiment.
Fig. 3C is another schematic diagram illustrating a short message displayed in a short message application according to a second example embodiment.
Fig. 4 is a flow chart showing a method for determining a display of a short message according to an example embodiment.
Fig. 5A is a schematic diagram illustrating how to configure a short message displaying rule database according to an example embodiment.
Fig. 5B is a schematic diagram illustrating a custom displaying style of content of a short message according to an example embodiment.
Fig. 6 is a block diagram showing a device for displaying content of a short message according to an example embodiment.
Fig. 7 is a block diagram showing another device for displaying content of a short message according to an example embodiment.
Fig. 8 is a block diagram showing a device for determining a display of a short message according to an example embodiment.
Fig. 9 is a block diagram showing another device for determining a display of a short message according to an example embodiment.
Fig. 10 is a block diagram suitable for a device for displaying content of a short message according to an example embodiment.
Fig. 11 is a block diagram suitable for a device for determining a display of a short message according to an example embodiment.
Fig. 12 is a block diagram showing a system for displaying content of a short message according to an example embodiment.

### DETAILED DESCRIPTION

Reference will now be made in detail to example embodiments, examples of which are illustrated in the accompanying drawings. The following description refers to the accompanying drawings in which the same numbers in different drawings represent the same or similar elements unless otherwise represented. The implementations set forth in the following description of example embodiments do not represent all implementations consistent with the invention. Instead, they are merely examples of apparatuses and methods consistent with aspects related to the invention as recited in the appended claims.

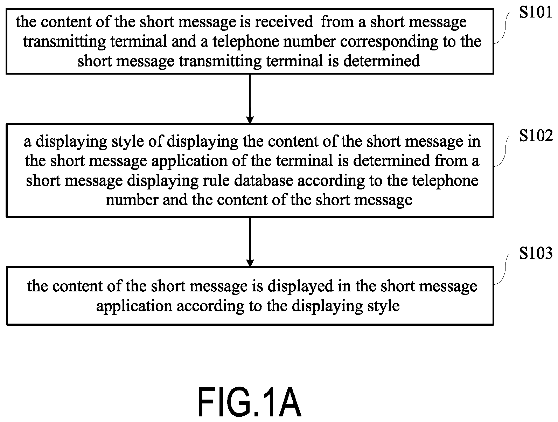

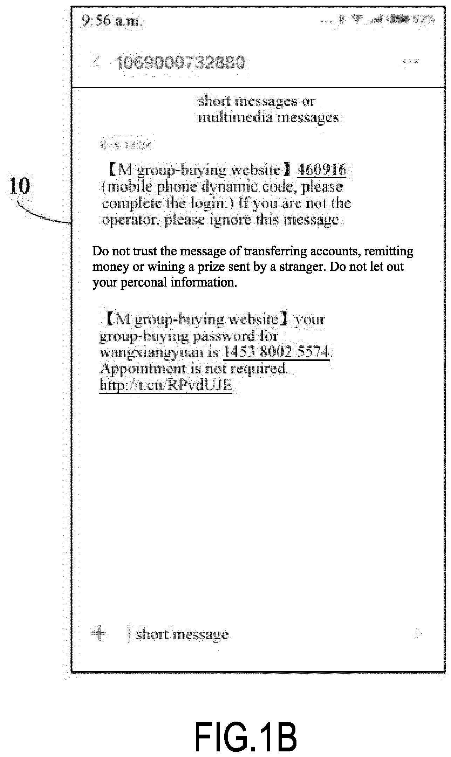

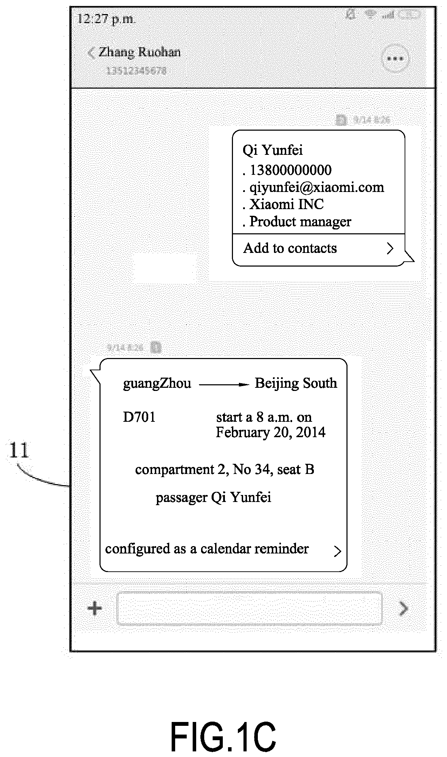

Fig. 1A is a flow chart showing a method for displaying content of a short message according to an example embodiment, Fig. 1B is a schematic diagram illustrating a short message displayed in a short message application according to an example embodiment, and Fig. 1C is another schematic diagram illustrating a short message displayed in a short message application according to an example embodiment; the method for displaying content of a short message may be performed by a terminal (for example: a smart phone, a tablet) and may display the content of the short message by installing a short message application in the terminal. As shown in Fig. 1A, the method for displaying content of a short message includes following steps S101-S103.

In step S101, the content of the short message is received from a short message transmitting terminal and a telephone number corresponding to the short message transmitting terminal is determined.

In an embodiment of the present invention, the short message transmitting terminal may be another terminal that the terminal performing the method for displaying content of a short message. In an embodiment of the present invention, the content of the short message may be the content of the short message sent by an ordinary user via another terminal to the terminal, a notification message sent by a merchant via the electronic business platform to the terminal, or a reminder message sent by a telecom operator via its telecom operating server to the terminal. In an embodiment of the present invention, the telephone number of the short message transmitting terminal may be a customer service telephone number provided by the merchant, a customer service telephone number provided by the operator, or a telephone number of the ordinary user.

In step S102, a displaying style of displaying the content of the short message in the short message application of the terminal is determined from a short message displaying rule database according to the telephone number and the content of the short message.

In an embodiment of the present invention, each displaying rule in the short message displaying rule database may include: the telephone number or a segment of the telephone number, characteristics of the content of the short message, the displaying styles corresponding to different content of the short message and/or telephone numbers and operations needed to be provided in the user interface of the short message application (for example, performing a jump according to an operation of clicking a button by the user, performing a jump according to a text link, etc.). For example, if the terminal receives the reminder message sent from the customer service telephone number of the telecom operator, the corresponding displaying style in the short message displaying rule database may be determined according to the customer service telephone number of the telecom operator; if the terminal receives the notification message sent from the merchant via the electronic business platform, the corresponding displaying style in the short message displaying rule database may be determined according to the customer service telephone number corresponding to the electronic business platform; if the terminal receives the ordinary short message from the short message transmitting terminal, the corresponding displaying style in the short message displaying rule database may be determined according to the content of the short message.

In step S103, the content of the short message is displayed in the short message application according to the displaying style.

In an embodiment of the present invention, as shown in Fig. 1B, the content of the short message sent by the merchant of the M group-buying website via the customer service telephone number 1069000732880 to the short message application 10 of the terminal is displayed. In the displayed content of the short message, "http://t.cn/RPvdUJE" is displayed in a form of link in the interface of the short message application, while the dynamic code "460916" and the group-buying password "145380025574" are displayed in a form of consecutive characters. By this style of displaying the content of the short message, the user may directly obtain the key information in the content of the short message, for example, the dynamic code "460916" and the group-buying password "145380025574". And since "http://t.cn/RPvdUJE" is displayed in a form of link, if the user clicks the link, the URL corresponding to the link may be shown directly, such that the user needs not manually input the link into the browser, thus greatly increasing the convenience of the user operation. In another embodiment of the present invention, as shown in Fig. 1C, if the ordinal user "Qi Yunfei" sends the short message about personal information of "Qi Yunfei" to "Zhang Ruohan", the corresponding displaying style in the short message displaying rule database may be determined to be a business card style according to the content of the short message. If "Zhang Ruohan" sends the short message about train ticket information to "Qi Yunfei" and the terminal of "Qi Yunfei" detects that the content of the short message is the train ticket information, then the terminal searches for the displaying style corresponding to the train ticket in the short message displaying rule database, and then displays the content of the short message in a form of train ticket to "Qi Yunfei" therefore, there are a variety of displaying styles for displaying the content of the short message in the short message application of the terminal held by "Qi Yunfei" .

In this embodiment of the present invention, the displaying style of displaying the content of the short message in the short message application of the terminal is determined from the short message displaying rule database according to the telephone number and the content of the short message, and the content of the short message is displayed in the short message application according to the displaying style, so that the content of the short message may be displayed in diverse ways in the terminal.

In an embodiment of the present invention, step S102 includes following steps of:
determining priorities of the telephone number and the content of the short message for the displaying style of the content of the short message according to a first displaying rule in the short message displaying rule database;
determining the displaying style of displaying the content of the short message in the short message application of the terminal according to the priorities.

If the priority of the content of the short message is higher than that of the telephone number, the step of determining the displaying style of displaying the content of the short message in the short message application of the terminal according to the priorities includes following steps of:
identifying consecutive characters in the content of the short message according to a second displaying rule in the short message displaying rule database;
determining a displaying style of displaying the consecutive characters as a text link in the short message application of the terminal.

In an embodiment of the present invention, the method for displaying content of a short message further includes following steps of:
monitoring whether the text link is clicked by a user;
determining to jump from a user interface of the short message application to a first user interface corresponding to the text link if it is monitored that the text link is clicked by the user.

In an embodiment of the present invention, if the priority of the telephone number is higher than that of the content of the short message, the step of determining the displaying style of displaying the content of the short message in the short message application of the terminal according to the priorities includes following steps of:
determining a third displaying rule determined by the short message transmitting terminal corresponding to the telephone number in the short message displaying rule database;
determining a button related to the content of the short message and displayed in the short message application of the terminal according to the third displaying rule determined by the short message transmitting terminal corresponding to the telephone number in the short message displaying rule database.

In an embodiment of the present invention, the method for displaying content of a short message further includes following steps of:
monitoring whether the button is clicked by a user;
determining to jump from a user interface of the short message application to a second user interface corresponding to the button if it is monitored that the button is clicked by the user.

In an embodiment of the present invention, the method for displaying content of a short message further includes a step of:
updating the short message displaying rule database if it is determined that displaying styles in the short message displaying rule database are updated.

Concerning details about how to display the content of the short message in the terminal, reference is made to the following embodiments.

Thus, with the above described methods provided by embodiments of the present invention, the displaying style of displaying the content of the short message in the short message application of the terminal is determined from the short message displaying rule database according to the telephone number and the content of the short message, and the content of the short message is displayed in the short message application according to the displaying style, such that the content of the short message may be displayed in diverse ways in the terminal. Further, an operation related to the content of the short message may be added by means of the short message displaying rule database, and if the user performs the operation related to the content of the short message, the corresponding redirection may occur on the interface of the content of the short message, thus avoiding the case that the user needs to perform the operation related to the content of the short message manually after closing the short message, and greatly increasing the convenience of performing the operation based on the content of the short message for the user.

The technical solutions provided by embodiments of the present invention may be illustrated with reference to specific embodiments as follows.

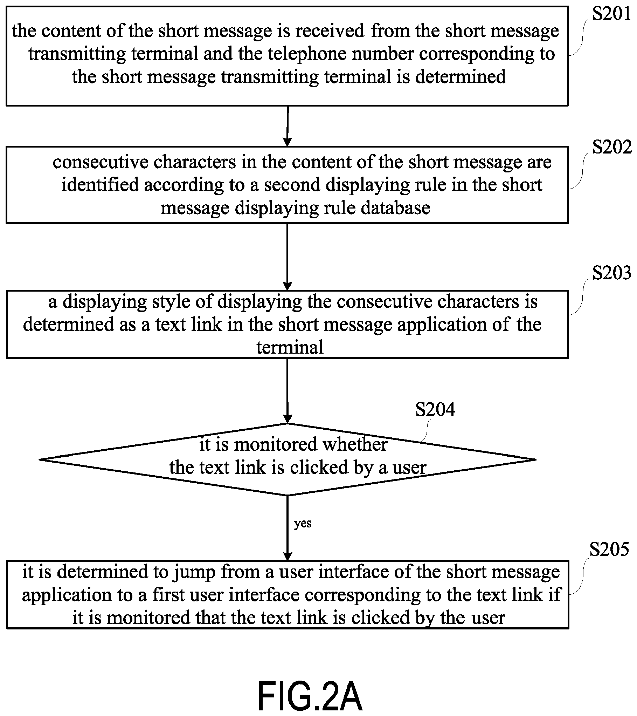

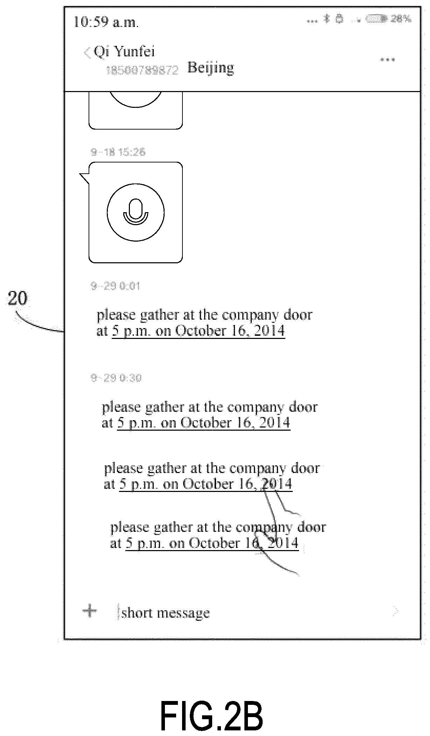

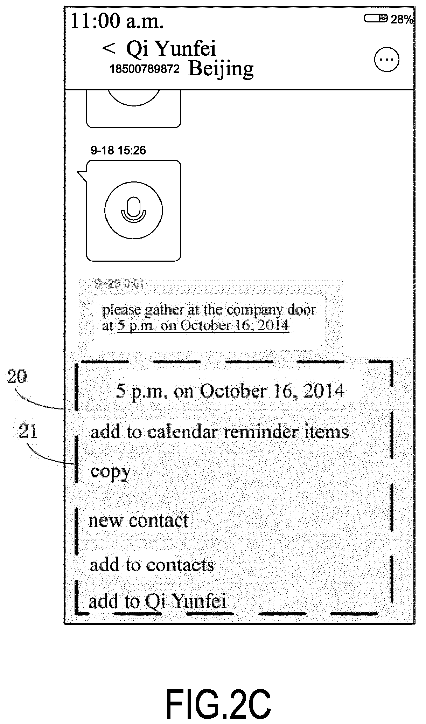

Fig. 2A is a flow chart showing a method for displaying content of a short message according to a first example embodiment, Fig. 2B is a schematic diagram illustrating a short message displayed in a short message application according to a first example embodiment, and Fig. 2C is another schematic diagram illustrating a short message displayed in a short message application according to a first example embodiment. In this embodiment, with the above described methods provided by the embodiments of the present invention, it is taking as an example that the priority of the content of the short message is higher than that of the telephone number, to explain exemplarily. The priorities of the telephone number and the content of the short message for the displaying style of the content of the short message may be determined according to the first displaying rule in the short message displaying rule database. The first displaying rule may be determined by the merchant or by the telecom operator. It is assumed that the first displaying rule may stipulate that the displaying style is determined according to the telephone number or according to the content of the short message. As shown in Fig. 2A, following steps are included.

In step S201, the content of the short message is received from the short message transmitting terminal and the telephone number corresponding to the short message transmitting terminal is determined.

Concerning the description of step S201, reference is made to the description of step S101, which will not be elaborated herein.

In step S202, consecutive characters in the content of the short message are identified according to a second displaying rule in the short message displaying rule database.

In an embodiment of the present invention, the consecutive characters may be a time and date, a courier receipt number, a group-buying identification code, a number identification, a merchant name or a personal name identification, etc. As shown in Fig. 2B, the content of the short message "please gather at the company door at 5 p.m. on October 16, 2014" is displayed in the short message application (app) 20, and the consecutive characters "5 p.m. on October 16, 2014" may be identified according to the second displaying rule in the short message displaying rule database.

In step S203, a displaying style of displaying the consecutive characters is determined as a text link in the short message application of the terminal.

In an embodiment of the present invention, as shown in Fig. 2B, the consecutive characters "5 p.m. on October 16, 2014" may be displayed in the style of the text link.

In step S204, it is monitored whether the text link is clicked by a user.

In step S205, it is determined to jump from a user interface of the short message application to a first user interface corresponding to the text link if it is monitored that the text link is clicked by the user.

In an embodiment of the present invention, as shown in Fig. 2C, if the user clicks the text link "5 p.m. on October 16, 2014" the first user interface 21 corresponding to the text link may be shown. The user may perform the reminder operation or other operations related to the content of the short message on the matters needed to be done on this day by an option "add to calendar reminder items" in the first user interface 21.

In this embodiment, the displaying style of displaying the content of the short message in the short message application of the terminal is determined from the short message displaying rule database according to the telephone number and the content of the short message, and the content of the short message is displayed in the short message application according to the displaying style, such that the displayed content of the short message may include the text link with which the user may perform the related operations, and a corresponding redirection may occur by means of the text link in the interface of the content of the short message, thus avoiding the case that the user needs to perform the operation related to the content of the short message manually after closing the short message, and greatly increasing the convenience of performing the operation based on the content of the short message for the user.

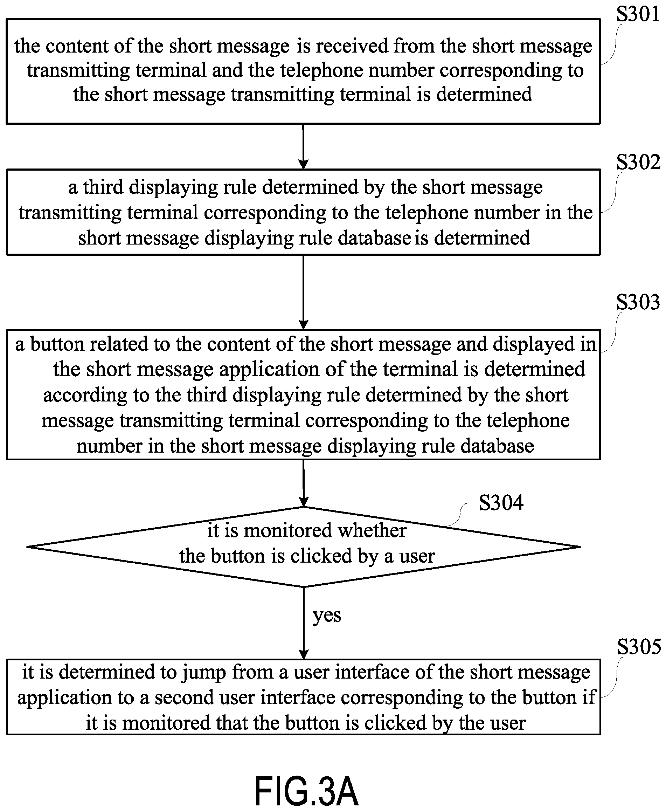

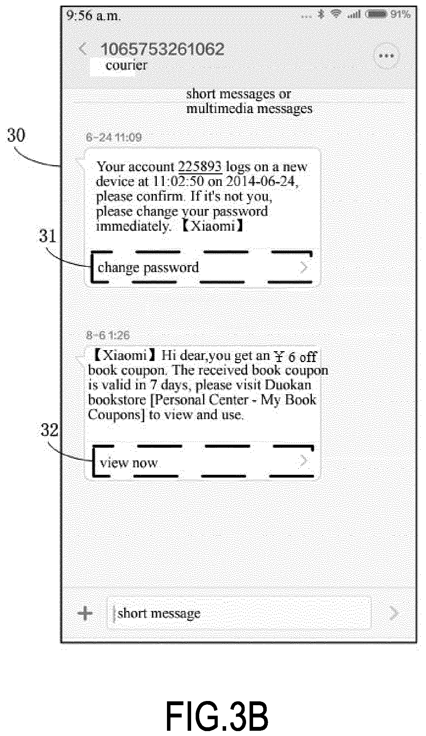

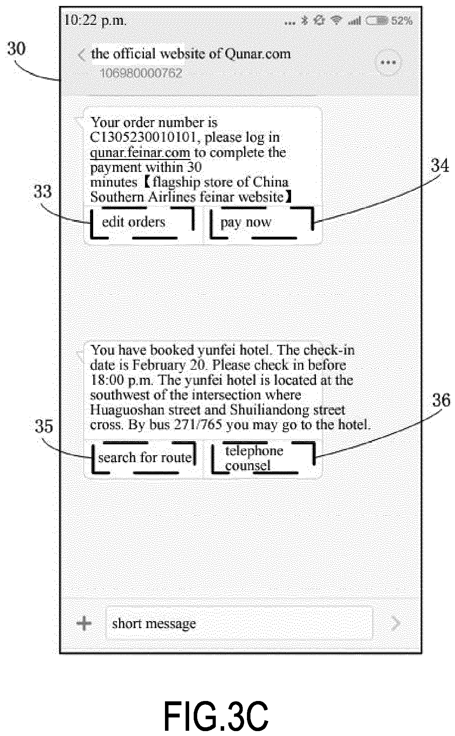

Fig. 3A is a flow chart showing a method for displaying content of a short message according to a second example embodiment, Fig. 3B is a schematic diagram illustrating a short message displayed in a short message application according to a second example embodiment, and Fig. 3C is another schematic diagram illustrating a short message displayed in a short message application according to a second example embodiment. In this embodiment, with the above described methods provided by the embodiments of the present invention, it is taken as an example that the priority of the telephone number is higher than that of the content of the short message, to explain exemplarily. The priorities of the telephone number and the content of the short message for the displaying style of the content of the short message may be determined according to the first displaying rule in the short message displaying rule database. The first displaying rule may be determined by the merchant or by the operator. It is assumed that the first displaying rule may stipulate that the displaying style is determined according to the telephone number or according to the content of the short message. As shown in Fig. 3A, following steps are included.

In step S301, the content of the short message is received from the short message transmitting terminal and the telephone number corresponding to the short message transmitting terminal is determined.

Concerning the description of step S301, reference is made to the description of step S101, which will not be elaborated herein.

In step S302, a third displaying rule determined by the short message transmitting terminal corresponding to the telephone number in the short message displaying rule database is determined.

In step S303, a button related to the content of the short message and displayed in the short message application of the terminal is determined according to the third displaying rule determined by the short message transmitting terminal corresponding to the telephone number in the short message displaying rule database.

In an embodiment of the present invention, if the customer service telephone number corresponding to the short message transmitting terminal is the service telephone number provided by the electronic business platform, the short message transmitting terminal may customize the displaying style of the content of the short message to be sent according to the service telephone number. As shown in Fig. 3B, there is the content of the short messages sent by the courier with the telephone number "1065753261062" to the terminal. In the content of the first short message, since the content of the first short message refers to the password security, the button 31 "change password" is provided. In the content of the second short message, since the content of the second short message refers to book coupons needed to be viewed by the user, the button 32 "view now" is provided. In another embodiment of the present invention, as shown in Fig. 3C, there is the content of the short messages from the service telephone number "106980000762" of the official website "Qunar.com". In the content of the first short message, since the content of the first short message refers to the payment and orders, the button 33 "edit orders" and the button 34 "pay now" are provided. In the content of the second short message, since the content of the second short message refers to hotels and routes, the button 35 "search for routes" and the button 36 "telephone counsel" are provided. It can be seen from the content of the short messages and the displayed buttons shown in Figs. 3B and 3C that, in embodiments of the present invention, the merchant may display the buttons related to the content of the short messages to be sent when displaying the content of the short messages according to the content of the short message to be sent, thus avoiding the case that the user needs to restart the related application after exiting the short message, and simplifying the operations of the user.

In step S304, it is monitored whether the button is clicked by a user.

In step S305, it is determined to jump from a user interface of the short message application to a second user interface corresponding to the button if it is monitored that the button is clicked by the user.

In an embodiment of the present invention, the content displayed in the second user interface is related to the content of the short message. For example, for the button 31 "change password" shown in Fig. 3B, if the user clicks the button 31, the content displayed in the second user interface is an input option for inputting an original password by the user and an input option for inputting a new password. The description of other buttons is related to their names, which will not be elaborated herein.

In this embodiments, the displaying style of displaying the content of the short message in the short message application of the terminal is determined from the short message displaying rule database according to the telephone number and the content of the short message, and the content of the short message is displayed in the short message application according to the displaying style, such that the displayed content of the short message may include the button with which the user may perform the related operation, and the corresponding redirection may occur by means of the button in the interface of the content of the short message, thus avoiding the case that the user needs to perform the operation related to the content of the short message manually after closing the short message, and greatly increasing the convenience of performing the operation based on the content of the short message for the user.

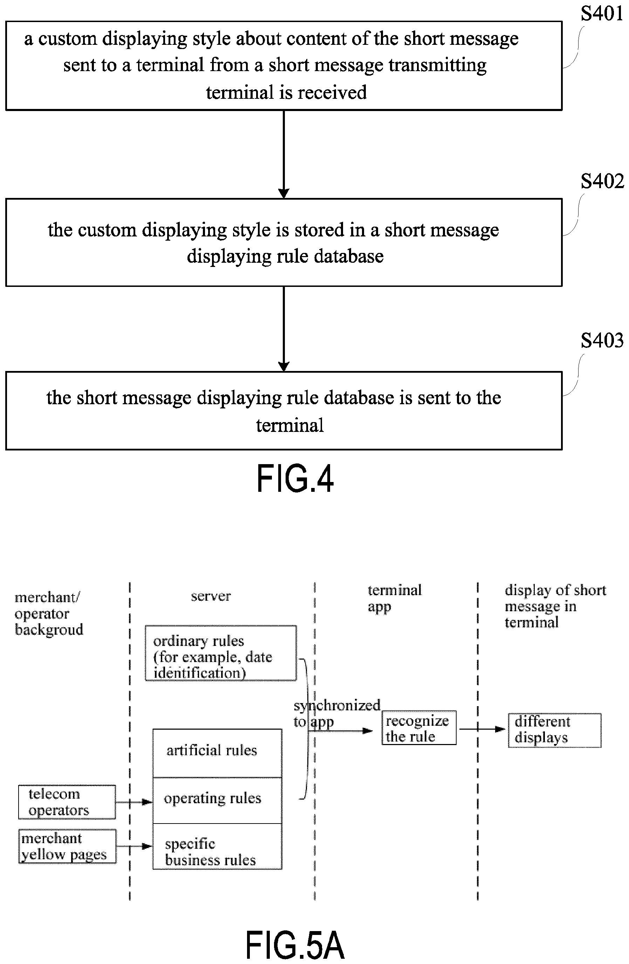

Fig. 4 is a flow chart showing a method for determining a display of a short message according to an example embodiment, and the method for determining a display of a short message may be performed by a server. As shown in Fig. 4, the method for determining a display of a short message includes following steps S401-S403.

In step S401, a custom displaying style about content of the short message sent to a terminal from a short message transmitting terminal is received.

In step S402, the custom displaying style is stored in a short message displaying rule database.

In an embodiment of the present invention, the custom displaying style may be customized by the short message transmitting terminal according to the content of the short message needed to be sent. Again referring to Fig. 3B, there is the content of the short messages sent by the courier with the telephone number "1065753261062" to the terminal. In the content of the first short message, since the content of the first short message refers to the password security, the displaying rule required to be determined in the short message displaying rule database is to provide the button 31 "change password". In the content of the second short message, since content of the second short message refers to book coupons needed to be viewed by the user, the displaying rule required to be determined in the short message displaying rule database is to provide the button 32 "view now". In another embodiment of the present invention, as shown in Fig. 3C, there is the content of the short messages from the service telephone number "106980000762" of the official website "Qunar.com". In the content of the first short message, since the content of the first short message refers to the payment and orders, the displaying rule required to be determined in the short message displaying rule database is to provide the button 33 "edit orders" and the button 34 "pay now". In the content of the second short message, since the content of the second short message refers to hotels and routes, the displaying rule required to be determined in the short message displaying rule database is to provide the button 35 "search for routes" and the button 36 "telephone counsel". It can be seen from the content of the short messages and the displayed buttons shown in Figs. 3B and 3C that, in embodiments of the present invention, the merchant may customize the displaying styles according to the content of the short messages needed to be sent, and may store the customized displaying styles in the short message displaying rule database, thus avoiding the case that the user needs to restart the related application after exiting the short message, and simplifying the operations of the user.

In step S403, the short message displaying rule database is sent to the terminal.

In an embodiment of the present invention, concerning the process of realizing the display of the content of the short message by the terminal according to the short message displaying rule database, reference is made to the above described embodiments, which will not be elaborated herein.

In this embodiment of the present invention, the custom displaying style about the content of the short message sent to the terminal from the short message transmitting terminal is received, and the custom displaying style is stored in the short message displaying rule database, such that the user do not need to restart the related application after exiting the short message, thus simplifying the operations of the user.

In an embodiment of the present invention, the method for determining a display of a short message further includes following steps of:
determining a first displaying rule determined by the short message transmitting terminal in the short message displaying rule database;
determining priorities of the content of the short message and a telephone number of the short message transmitting terminal according to the first displaying rule determined by the short message transmitting terminal in the short message displaying rule database.

In an embodiment of the present invention, the method for determining a display of a short message further includes following step of:
sending an updated short message displaying rule database to the terminal if the short message displaying rule database is updated.

Concerning details about how to display the content of the short message in the terminal, reference is made to the following embodiments.

Thus, with the above described methods provided by embodiments of the present invention, the displaying style of displaying the content of the short message in the short message application of the terminal is determined from the short message displaying rule database according to the telephone number and the content of the short message, and the content of the short message is displayed in the short message application according to the displaying style, such that the content of the short message may be displayed in diverse ways in the terminal. Further, an operation related to the content of the short message may be added by means of the short message displaying rule database, and if the user performs the operation related to the content of the short message, the corresponding redirection may occur on the interface of the content of the short message, such that the case that the user needs to perform the operation related to the content of the short message manually after closing the short message may be avoided, thus greatly increasing the convenience of performing the operation based on the content of the short message for the user.

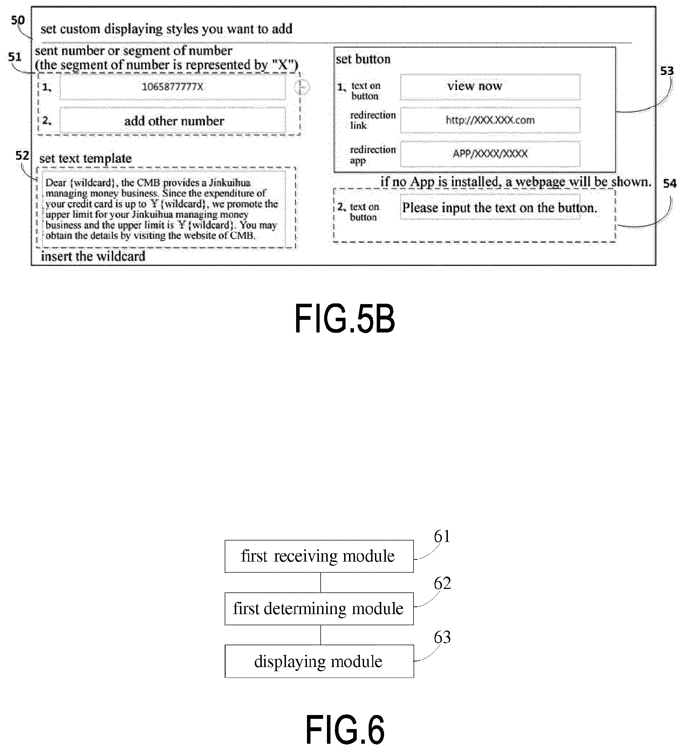

Fig. 5A is a schematic diagram illustrating how to configure a short message displaying rule database according to an example embodiment, Fig. 5B is a schematic diagram illustrating a custom displaying style of content of a short message according to an example embodiment. In an embodiment shown in Fig. 5A, at the merchant/operator background side, the telecom operators and the merchant yellow pages respectively set the required custom displaying styles of the content of the short messages on a server according to operating rules and specific business rules. The server stores a lot of custom displaying styles of various merchants and the like in the short message displaying rule database, so as to form different displaying rules of content of the short messages. In addition, the displaying rules (artificial rules) may be set manually in the server. In addition, the server also may set the general displaying rules according to the hobbies and habits that the terminal sends the content of the short messages, for example, the date and time in the content of the short message may be displayed in the form of the text link.

After obtaining the displaying rules set by various merchants and telecom operators, the server updates them to the application of the terminal by means of short message displaying rule database. After receiving the content of the short message from the short message transmitting terminal, the application of the terminal identifies the telephone number and the content of the short message, and determines the priorities of the displaying rules, and finally displays the content of the short message in the user interface of the application of the terminal according to a method in above described embodiments.

In an embodiment of the present invention, as shown in Fig. 5B, the custom displaying style 50 of the China Merchant Bank is illustrated. In the region 51 "send number or segment of number" in the custom displaying style 50, the corresponding segment "1065877777X" of number is set. In the region 52 "set text template", the text template of content of the short message to be sent is set. If the China Merchant Bank needs to display the consecutive characters or the buttons in the region 52 "set text template" the button and the text link displayed in the short message application of the terminal may be set in the region 53 of "set button" and the region 54 "text on button". If the China Merchant Bank sends the custom displaying styles to the server, the server stores the custom displaying styles in the short message displaying rule database. After receiving the content of the short message sent by China Merchant Bank through the segment of telephone number, the short message application identifies the telephone number and the content of the short message, and determines priorities of the displaying rules according to the displaying rules in the short message displaying rule database, and finally displays the content of the short message in the user interface of the short message application of the terminal according to a method in above described embodiments.

It can be seen that, the buttons and the text links in embodiments of the present invention shown in Figs. 2A and 3A may be combined to form a new embodiment, such that the content of the short message may be displayed in a form of button, also may be displayed in a form of text link or hypertext link in the user interface of the short message application.

Fig. 6 is a block diagram showing a device for displaying content of a short message according to an example embodiment. The device for displaying content of a short message may be a terminal. As shown in Fig. 6, the device for displaying content of a short message includes a first receiving module 61, a first determining module 62 and a displaying module 63.

The first receiving module 61 is configured to receive the content of the short message from a short message transmitting terminal and to determine a telephone number corresponding to the short message transmitting terminal.

The first determining module 62 is configured to determine a displaying style of displaying the content of the short message in a short message application of a terminal from a short message displaying rule database according to the telephone number determined by the first receiving module 61 and the content of the short message received by the first receiving module 61.

The displaying module 63 is configured to display the content of the short message received by the first receiving module 61 in the short message application according to the displaying style determined by the first determining module 62.

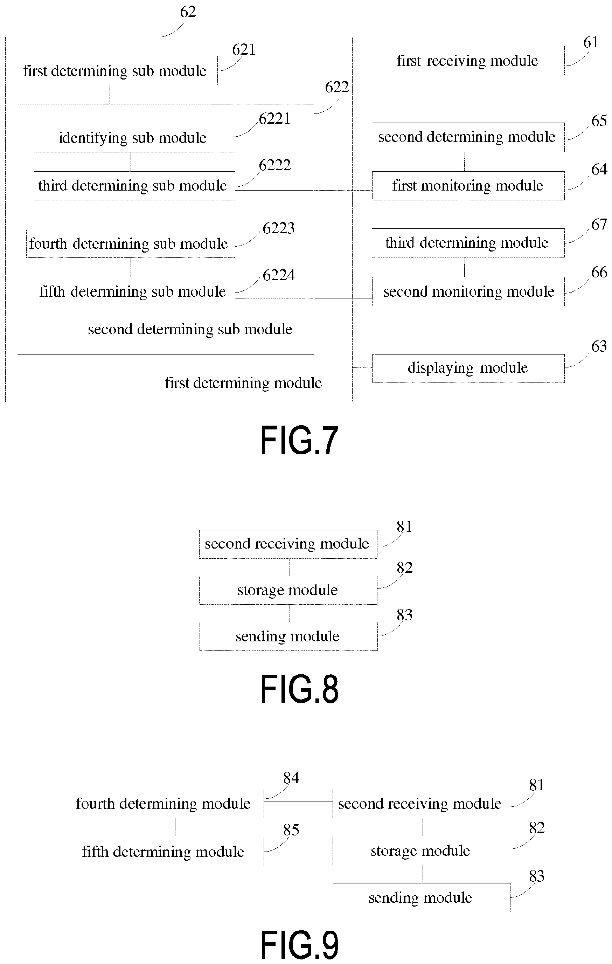

As shown in Fig. 7, the first determining module 62 may include a first determining sub module 621 and a second determining sub module 622.

The first determining sub module 621 is configured to determine priorities of the telephone number determined by the first receiving module 61 and the content of the short message received by the first receiving module 61 for the displaying style of the content of the short message according to a first displaying rule in the short message displaying rule database.

The second determining sub module 622 is configured to determine the displaying style of displaying the content of the short message in the short message application of the terminal according to the priorities determined by the first determining sub module 621.

In an embodiment of the present invention, if the priority of the content of the short message is higher than that of the telephone number, the second determining sub module 622 may include an identifying sub module 6221 and a third determining sub module 6222.

The identifying sub module 6221 is configured to identify consecutive characters in the content of the short message received by the first receiving module 61 according to a second displaying rule determined in the short message displaying rule database.

The third determining sub module 6222 is configured to determine a displaying style of displaying the consecutive characters determined by the identifying sub module 6221 as a text link in the short message application of the terminal.

In an embodiment of the present invention, the device may further include a first monitoring module 64 and a second determining module 65.

The first monitoring module 64 is configured to monitor whether the text link determined by the third determining sub module 6222 is clicked by a user.

The second determining module 65 is configured to determine to jump from a user interface of the short message application to a first user interface corresponding to the text link if the first monitoring module 64 monitors that the text link is clicked by a user.

In an embodiment of the present invention, if the priority of the telephone number is higher than that of the content of the short message, the second determining sub module 622 may include a fourth determining sub module 6223 and a fifth determining sub module 6224.

The fourth determining sub module 6223 is configured to determine a third displaying rule determined by the short message transmitting terminal corresponding to the telephone number in the short message displaying rule database.

The fifth determining sub module 6224 is configured to determine a button related to the content of the short message and displayed in the short message application of the terminal according to the third displaying rule determined by the fourth determining sub module 6223, in which the third displaying rule is determined by the short message transmitting terminal corresponding to the telephone number in the short message displaying rule database.

In an embodiment of the present invention, the device may further include a second monitoring module 66 and a third determining module 67.

The second monitoring module 66 is configured to monitor whether the button determined by the fifth determining sub module 6224 is clicked by a user.

The third determining module 67 is configured to determine to jump from a user interface of the short message application to a second user interface corresponding to the button if the second monitoring module 66 monitors that the button is clicked by the user.

In an embodiment of the present invention, the device may further include an updating module.

The updating module is configured to update the short message displaying rule database adopted by the first determining module 62 if it is determined that the displaying styles in the short message displaying rule database are updated.

Fig. 8 is a block diagram showing a device for determining a display of a short message according to an example embodiment. The device for determining a display of a short message may be the server. As shown in Fig. 8, the device for determining a display of a short message includes a second receiving module 81, a storage module 82 and a sending module 83.

The second receiving module 81 is configured to receive a custom displaying style about content of the short message sent to a terminal from a short message transmitting terminal.

The storage module 82 is configured to store the custom displaying style received by the second receiving module 81 in a short message displaying rule database.

The sending module 83 is configured to send the short message displaying rule database stored by the storage module 82 to the terminal.

As shown in Fig. 9, the device may further include a fourth determining module 84 and a fifth determining module 85.

The fourth determining module 84 is configured to determine a first displaying rule determined by the short message transmitting terminal in the short message displaying rule database.

The fifth determining module 85 is configured to determine priorities of the content of the short message and a telephone number of the short message transmitting terminal according to the first displaying rule determined by the fourth determining module 84, in which the first displaying rule is determined by the short message transmitting terminal in the short message displaying rule database.

In an embodiment of the present invention, the sending module 83 is further configured to send an updated short message displaying rule database to the terminal if the short message displaying rule database stored by the storage module 82 is updated.

With respect to the devices in the above embodiments, the specific manners for performing operations for individual modules therein have been described in detail in the embodiments regarding the methods, which are not elaborated herein again.

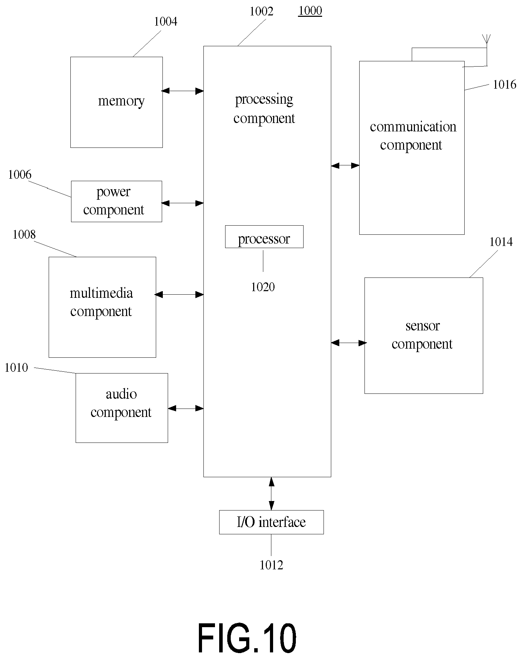

Fig. 10 is a block diagram suitable for a device for displaying content of a short message according to an example embodiment. For example, the device 1000 may be a mobile phone, a computer, a digital broadcast terminal, a messaging device, a gaming console, a tablet, a medical device, an exercise equipment, a personal digital assistant, and the like.

Referring to Fig. 10, the device 1000 may include one or more of the following components: a processing component 1002, a memory 1004, a power component 1006, a multimedia component 1008, an audio component 1010, an input/output (I/O) interface 1012, a sensor component 1014, and a communication component 1016.

The processing component 1002 typically controls overall operations of the device 1000, such as the operations associated with display, telephone calls, data communications, camera operations, and recording operations. The processing component 1002 may include one or more processors 1020 to execute instructions to perform all or part of the steps in the above described methods. Moreover, the processing component 1002 may include one or more modules which facilitate the interaction between the processing component 1002 and other components. For instance, the processing component 1002 may include a multimedia module to facilitate the interaction between the multimedia component 1008 and the processing component 1002.

The memory 1004 is configured to store various types of data to support the operation of the device 1000. Examples of such data include instructions for any applications or methods operated on the device 1000, contact data, phonebook data, messages, pictures, videos, etc. The memory 1004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1006 provides power to various components of the device 1000. The power component 1006 may include a power management system, one or more power sources, and any other components associated with the generation, management, and distribution of power in the device 1000.

The multimedia component 1008 includes a screen providing an output interface between the device 1000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1008 includes a front camera and/or a rear camera. The front camera and the rear camera may receive an external multimedia datum while the device 1000 is in an operation mode, such as a photographing mode or a video mode. Each of the front camera and the rear camera may be a fixed optical lens system or have focus and optical zoom capability.

The audio component 1010 is configured to output and/or input audio signals. For example, the audio component 1010 includes a microphone ("MIC") configured to receive an external audio signal when the device 1000 is in an operation mode, such as a call mode, a recording mode, and a voice recognition mode. The received audio signal may be further stored in the memory 1004 or transmitted via the communication component 1016. In some embodiments, the audio component 1010 further includes a speaker to output audio signals.

The I/O interface 1012 provides an interface between the processing component 1002 and peripheral interface modules, such as a keyboard, a click wheel, buttons, and the like. The buttons may include, but are not limited to, a home button, a volume button, a starting button, and a locking button.

The sensor component 1014 includes one or more sensors to provide status assessments of various aspects of the device 1000. For instance, the sensor component 1014 may detect an open/closed status of the device 1000, relative positioning of components, e.g., the display and the keypad, of the device 1000, a change in position of the device 1000 or a component of the device 1000, a presence or absence of user contact with the device 1000, an orientation or an acceleration/deceleration of the device 1000, and a change in temperature of the device 1000. The sensor component 1014 may include a proximity sensor configured to detect the presence of nearby objects without any physical contact. The sensor component 1014 may also include a light sensor, such as a CMOS or CCD image sensor, for use in imaging applications. In some embodiments, the sensor component 1014 may also include an accelerometer sensor, a gyroscope sensor, a magnetic sensor, a pressure sensor, or a temperature sensor.

The communication component 1016 is configured to facilitate communication, wired or wirelessly, between the device 1000 and other devices. The device 1000 can access a wireless network based on a communication standard, such as WiFi, 2G, or 3G, or a combination thereof. In one example embodiment, the communication component 1016 receives a broadcast signal or broadcast associated information from an external broadcast management system via a broadcast channel. In one example embodiment, the communication component 1016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the device 1000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In example embodiments, there is also provided a non-transitory computer-readable storage medium including instructions, such as included in the memory 1004, executable by the processor 1020 in the device 1000, for performing the above-described methods. For example, the non-transitory computer-readable storage medium may be a ROM, a RAM, a CD-ROM, a magnetic tape, a floppy disc, an optical data storage device, and the like.

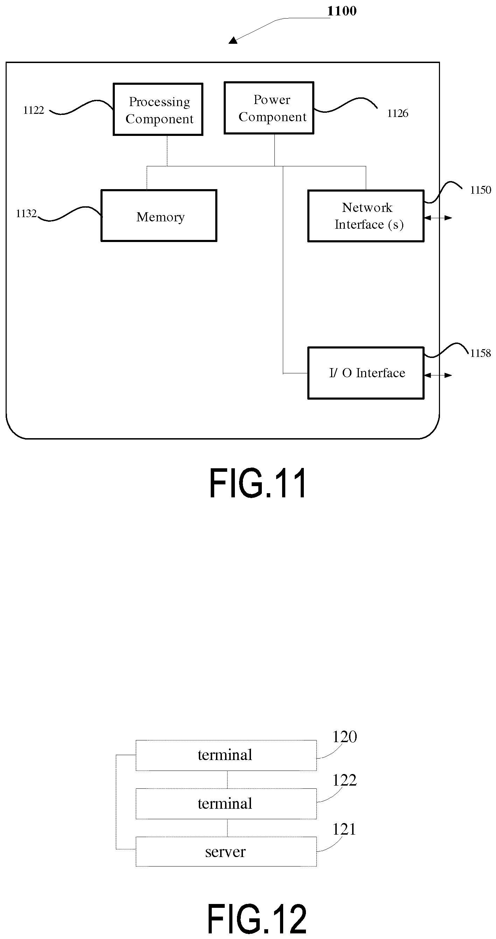

Fig. 11 is a block diagram suitable for a device for determining a display of a short message according to an example embodiment. The device 1100 may be a server. Referring to Fig. 11, the device 1100 may include a processing component 1122 further including one or more processors, and memory resources represented by a memory 1132, configured to store instructions executable by the processing component 1122, for example, applications. The applications stored in the memory 1132 may include one or more modules in which each module is corresponding to a set of instructions. In addition, the processing component 1122 is configured to execute the instructions to perform all or part of the steps in the above described methods.

The device 1100 further includes a power component 1126 configured for a power management of the device 1100, a wired or wireless network interface 1150 configured to connect the device 1100 to the network, and an input/output (I/O) interface 1158. The device 1100 may be based on an operating system stored in the memory 1132, for example, Windows ServerTM, Mac OS XTM, UnixTM, LinuxTM, FreeBSDTM and the like.

Fig. 12 is a block diagram showing a system for displaying content of a short message according to an example embodiment. The system for displaying content of a short message includes a server 121 and a terminal 122.

The server 121 is configured to receive a custom displaying style about the content of the short message sent to the terminal 122 from a short message transmitting terminal (for example, the terminal 120); to store the custom displaying style in a short message displaying rule database; and to send the short message displaying rule database to the terminal 122.

The terminal 122 is configured to receive the content of the short message from the short message transmitting terminal (for example, the terminal 120) and to determine a telephone number corresponding to the terminal 120; to determine a displaying style of displaying the content of the short message in a short message application of the terminal 122 from the short message displaying rule database according to the telephone number and the content of the short message; to display the content of the short message in the short message application according to the displaying style.

In this embodiment of the present invention, the terminal 122 determines the displaying style of displaying the content of the short message in the short message application of the terminal from the short message displaying rule database according to the telephone number and the content of the short message, and displays the content of the short message in the short message application according to the displaying style, such that the content of the short message may be displayed in diverse ways in the terminal. Further, an operation related to the content of the short message may be added by means of the short message displaying rule database, and if the user performs the operation related to the content of the short message, the corresponding redirection may occur on the interface of the content of the short message, thus avoiding the case that the user needs to perform the operation related to the content of the short message manually after closing the short message, and greatly increasing the convenience of performing the operation based on the content of the short message for the user.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art.

## Claims

1. A method for displaying content of a short message, comprising:
receiving (S101,S201,S301) the content of the short message from a short message transmitting terminal and determining a telephone number corresponding to the short message transmitting terminal;
determining (S102) a displaying style of displaying the content of the short message in a short message application of a terminal from a short message displaying rule database according to the telephone number and the content of the short message; and
displaying (S103) the content of the short message in the short message application according to the displaying style;
wherein the step of determining (S102) a displaying style of displaying the content of the short message in a short message application of a terminal from a short message displaying rule database according to the telephone number and the content of the short message comprises:
determining priorities of the telephone number and the content of the short message for the displaying style of the content of the short message according to a first displaying rule in the short message displaying rule database; and
determining the displaying style of displaying the content of the short message in the short message application of the terminal according to the priorities.

2. The method according to claim 1, wherein if the priority of the content of the short message is higher than that of the telephone number, the step of determining the displaying style of displaying the content of the short message in the short message application of the terminal according to the priorities comprises:
identifying (S202) consecutive characters in the content of the short message according to a second displaying rule in the short message displaying rule database; and
determining (S203) a displaying style of displaying the consecutive characters as a text link in the short message application of the terminal.

3. The method according to claim 2, further comprising:
monitoring (S204) whether the text link is clicked by a user; and
determining (S205) to jump from a user interface of the short message application to a first user interface corresponding to the text link if it is monitored that the text link is clicked by the user.

4. The method according to claim 1, wherein if the priority of the telephone number is higher than that of the content of the short message, the step of determining the displaying style of displaying the content of the short message in the short message application of the terminal according to the priorities comprises:
determining (S302) a third displaying rule determined by the short message transmitting terminal corresponding to the telephone number in the short message displaying rule database; and
determining (S303) a button related to the content of the short message and displayed in the short message application of the terminal according to the third displaying rule determined by the short message transmitting terminal corresponding to the telephone number in the short message displaying rule database.

5. The method according to claim 4, further comprising:
monitoring (S304) whether the button is clicked by a user; and
determining (S305) to jump from a user interface of the short message application to a second user interface corresponding to the button if it is monitored that the button is clicked by the user.

6. The method according to any one of claims 1 to 5, further comprising:
updating the short message displaying rule database if it is determined that displaying styles in the short message displaying rule database are updated.

7. A method for determining a display of a short message, comprising:
receiving (S401) a custom displaying style about content of the short message sent to a terminal from a short message transmitting terminal;
storing (S402) the custom displaying style in a short message displaying rule database; and
sending (S403) the short message displaying rule database to the terminal,
the displaying style of displaying the content of the short message in the short message application of the terminal being determined from the short message displaying rule database according to a telephone number and a content of the short message, and the content of the short message being displayed in the short message application according to the displaying style;
the determining method further comprising:
determining a first displaying rule determined by the short message transmitting terminal in the short message displaying rule database; and
determining priorities of the content of the short message and a telephone number of the short message transmitting terminal according to the first displaying rule determined by the short message transmitting terminal in the short message displaying rule database.

8. The determining method according to claim 7, further comprising:
sending an updated short message displaying rule database to the terminal if the short message displaying rule database is updated.

9. A device for displaying content of a short message, comprising:
a first receiving module (61), configured to receive the content of the short message from a short message transmitting terminal and determine a telephone number corresponding to the short message transmitting terminal;
a first determining module (62), configured to determine a displaying style of displaying the content of the short message in a short message application of a terminal from a short message displaying rule database according to the telephone number determined by the first receiving module and the content of the short message received by the first receiving module; and
a displaying module (63), configured to display the content of the short message in the short message application according to the displaying style determined by the first determining module;
a first determining sub module, configured to determine priorities of the telephone number determined by the first receiving module and the content of the short message received by the first receiving module for the displaying style of the content of the short message according to a first displaying rule in the short message displaying rule database; and
a second determining sub module, configured to determine the displaying style of displaying the content of the short message in the short message application of the terminal according to the priorities determined by the first determining sub module.

10. A device for determining a display of a short message, comprising:
a second receiving module (81), configured to receive a custom displaying style about content of the short message sent to a terminal from a short message transmitting terminal;
a storage module (82), configured to store the custom displaying style received by the second receiving module in a short message displaying rule database; and
a sending module (83), configured to send the short message displaying rule database stored by the storage module to the terminal;
the displaying style of displaying the content of the short message in the short message application of the terminal being determined from the short message displaying rule database according to a telephone number and a content of the short message, and the content of the short message being displayed in the short message application according to the displaying style;
a fourth determining module, configured to determine a first displaying rule determined by the short message transmitting terminal in the short message displaying rule database; and
a fifth determining module, configured to determine priorities of the content of the short message and a telephone number of the short message transmitting terminal according to the first displaying rule determined by the fourth determining module, in which the first displaying rule is determined by the short message transmitting terminal in the short message displaying rule database.

11. A system for displaying content of a short message, comprising a server and a terminal, wherein
the server is configured to receive a custom displaying style about the content of the short message sent to the terminal from a short message transmitting terminal; to store the custom displaying style in a short message displaying rule database; to send the short message displaying rule database to the terminal;
the server is further configured to:
determine a first displaying rule determined by the short message transmitting terminal in the short message displaying rule database; and
determine priorities of the content of the short message and a telephone number of the short message transmitting terminal according to the first displaying rule determined by the short message transmitting terminal in the short message displaying rule database.
the terminal is configured to receive the content of the short message from the short message transmitting terminal and to determine a telephone number corresponding to the short message transmitting terminal; to determine a displaying style of displaying the content of the short message in a short message application of the terminal from the short message displaying rule database according to the telephone number and the content of the short message; to display the content of the short message in the short message application according to the displaying style;
wherein terminal is configured to determine a displaying style of displaying the content of the short message in a short message application of a terminal from a short message displaying rule database according to the telephone number and the content of the short message by:
determining priorities of the telephone number and the content of the short message for the displaying style of the content of the short message according to a first displaying rule in the short message displaying rule database; and
determining the displaying style of displaying the content of the short message in the short message application of the terminal according to the priorities.

12. A computer program, including instructions for executing the steps of a method for displaying content of a short message according to any one of claims 1 to 6 when said program is executed by a computer.

13. A recording medium readable by a computer and having recorded thereon a computer program including instructions for executing the steps of a method for displaying content of a short message according to any one of claims 1 to 6.

## Patentansprüche

1. Verfahren zum Anzeigen von Inhalt einer Kurznachricht, umfassend:
Empfangen (S101, S201, S301) des Inhalts der Kurznachricht von einem Kurznachricht-sendenden Endgerät und Bestimmen einer Telefonnummer, die dem Kurznachricht-sendenden Endgerät entspricht,
Bestimmen (S102) eines Anzeigestils zum Anzeigen des Inhalts der Kurznachricht in einer Kurznachrichten-Anwendung eines Endgerätes aus einer Kurznachrichten-Anzeigeregeldatenbank gemäß der Telefonnummer und dem Inhalt der Kurznachricht, und
Anzeigen (S103) des Inhalts der Kurznachricht in der Kurznachrichten-Anwendung gemäß dem Anzeigestil,
wobei der Schritt des Bestimmens (S102) eines Anzeigestils zum Anzeigen des Inhalts der Kurznachricht in einer Kurznachrichten-Anwendung eines Endgerätes aus einer Kurznachrichten-Anzeigeregeldatenbank gemäß der Telefonnummer und dem Inhalt der Kurznachricht umfasst:
Bestimmen von Prioritäten der Telefonnummer und des Inhalts der Kurznachricht für den Anzeigestil des Inhalts der Kurznachricht gemäß einer ersten Anzeigeregel in der Kurznachrichten-Anzeigeregeldatenbank, und
Bestimmen des Anzeigestils zum Anzeigen des Inhalts der Kurznachricht in der Kurznachrichten-Anwendung des Endgerätes gemäß den Prioritäten.

2. Verfahren nach Anspruch 1, wobei, falls die Priorität des Inhalts der Kurznachricht höher ist als die der Telefonnummer, der Schritt des Bestimmens des Anzeigestils zum Anzeigen des Inhalts der Kurznachricht in der Kurznachrichten-Anwendung des Endgerätes gemäß den Prioritäten umfasst:
Identifizieren (S202) aufeinanderfolgender Zeichen im Inhalt der Kurznachricht gemäß einer zweiten Anzeigeregel in der Kurznachrichten-Anzeigeregeldatenbank, und
Bestimmen (S203) eines Anzeigestils zum Anzeigen der aufeinanderfolgenden Zeichen als Textlink in der Kurznachrichten-Anwendung des Endgerätes.

3. Verfahren nach Anspruch 2, ferner umfassend:
Überwachen (S204), ob der Textlink durch einen Nutzer angeklickt wird, und
Bestimmen (S205), von einer Benutzerschnittstelle der Kurznachrichten-Anwendung zu einer ersten Benutzerschnittstelle zu springen, die dem Textlink entspricht, falls festgestellt wird, dass der Textlink durch den Nutzer angeklickt wird.

4. Verfahren nach Anspruch 1, wobei, falls die Priorität der Telefonnummer höher ist als die des Inhalts der Kurznachricht, der Schritt des Bestimmens des Anzeigestils zum Anzeigen des Inhalts der Kurznachricht in der Kurznachrichten-Anwendung des Endgerätes gemäß den Prioritäten umfasst:
Bestimmen (S302) einer dritten Anzeigeregel, die durch das Kurznachricht-sendende Endgerät bestimmt wird, das der Telefonnummer in der Kurznachrichten-Anzeigeregeldatenbank entspricht, und
Bestimmen (S303) einer Schaltfläche, die zu dem Inhalt der Kurznachricht in Beziehung steht und in der Kurznachrichten-Anwendung des Endgerätes gemäß der dritten Anzeigeregel angezeigt wird, die durch das Kurznachricht-sendende Endgerät bestimmt wird, das der Telefonnummer in der Kurznachrichten-Anzeigeregeldatenbank entspricht.

5. Verfahren nach Anspruch 4, ferner umfassend:
Überwachen (S304), ob die Schaltfläche durch einen Nutzer angeklickt wird, und
Bestimmen (S305), von einer Benutzerschnittstelle der Kurznachrichten-Anwendung zu einer zweiten Benutzerschnittstelle zu springen, die der Schaltfläche entspricht, falls festgestellt wird, dass die Schaltfläche durch den Nutzer angeklickt wird.

6. Verfahren nach einem der Ansprüche 1 bis 5, ferner umfassend:
Aktualisieren der Kurznachrichten-Anzeigeregeldatenbank, falls bestimmt wird, dass Anzeigestile in der Kurznachrichten-Anzeigeregeldatenbank aktualisiert werden.

7. Verfahren zum Bestimmen einer Anzeige einer Kurznachricht, umfassend:
Empfangen (S401) eines speziellen Anzeigestils über einen Inhalt der Kurznachricht, die von einem Kurznachricht-sendenden Endgerät zu einem Endgerät gesendet wurde,
Speichern (S402) des speziellen Anzeigestils in einer Kurznachrichten-Anzeigeregeldatenbank, und
Senden (S403) der Kurznachrichten-Anzeigeregeldatenbank zu dem Endgerät,
wobei der Anzeigestil zum Anzeigen des Inhalts der Kurznachricht in der Kurznachrichten-Anwendung des Endgerätes aus der Kurznachrichten-Anzeigeregeldatenbank gemäß einer Telefonnummer und eines Inhalts der Kurznachricht bestimmt wird und der Inhalt der Kurznachricht in der Kurznachrichten-Anwendung gemäß dem Anzeigestil angezeigt wird,
wobei das Bestimmungsverfahren ferner umfasst:
Bestimmen einer ersten Anzeigeregel, die durch das Kurznachricht-sendende Endgerät in der Kurznachrichten-Anzeigeregeldatenbank bestimmt wird, und
Bestimmen von Prioritäten des Inhalts der Kurznachricht und einer Telefonnummer des Kurznachricht-sendenden Endgerätes gemäß der ersten Anzeigeregel, die durch das Kurznachricht-sendende Endgerät in der Kurznachrichten-Anzeigeregeldatenbank bestimmt wird.

8. Bestimmungsverfahren nach Anspruch 7, ferner umfassend:
Senden einer aktualisierten Kurznachrichten-Anzeigeregeldatenbank zu dem Endgerät, falls die Kurznachrichten-Anzeigeregeldatenbank aktualisiert wird.

9. Vorrichtung zum Anzeigen von Inhalt einer Kurznachricht, umfassend:
ein erstes Empfangsmodul (61), das dafür konfiguriert ist, den Inhalt der Kurznachricht von einem Kurznachricht-sendenden Endgerät zu empfangen und eine Telefonnummer zu bestimmen, die dem Kurznachricht-sendenden Endgerät entspricht,
ein erstes Bestimmungsmodul (62), das dafür konfiguriert ist, einen Anzeigestil zum Anzeigen des Inhalts der Kurznachricht in einer Kurznachrichten-Anwendung eines Endgerätes aus einer Kurznachrichten-Anzeigeregeldatenbank gemäß der durch das erste Empfangsmodul bestimmten Telefonnummer und dem Inhalt der durch das erste Empfangsmodul empfangenen Kurznachricht zu bestimmen, und
ein Anzeigemodul (63), das dafür konfiguriert ist, den Inhalt der Kurznachricht in der Kurznachrichten-Anwendung gemäß dem Anzeigestil anzuzeigen, der durch das erste Bestimmungsmodul bestimmt wird,
ein erstes Bestimmungs-Teilmodul, das dafür konfiguriert ist, Prioritäten der durch das erste Empfangsmodul bestimmten Telefonnummer und des Inhalts der durch das erste Empfangsmodul empfangenen Kurznachricht für den Anzeigestil des Inhalts der Kurznachricht gemäß einer ersten Anzeigeregel in der Kurznachrichten-Anzeigeregeldatenbank zu bestimmen, und
ein zweites Bestimmungs-Teilmodul, das dafür konfiguriert ist, den Anzeigestil zum Anzeigen des Inhalts der Kurznachricht in der Kurznachrichten-Anwendung des Endgerätes gemäß den durch das erste Bestimmungs-Teilmodul bestimmten Prioritäten zu bestimmen.

10. Vorrichtung zum Bestimmen einer Anzeige einer Kurznachricht, umfassend:
ein zweites Empfangsmodul (81), das dafür konfiguriert ist, einen speziellen Anzeigestil über einen Inhalt der Kurznachricht zu empfangen, die von einem Kurznachricht-sendenden Endgerät zu einem Endgerät gesendet wurde,
ein Speichermodul (82), das dafür konfiguriert ist, den durch das zweite Empfangsmodul empfangenen speziellen Anzeigestil in einer Kurznachrichten-Anzeigeregeldatenbank zu speichern, und
ein Sendemodul (83), das dafür konfiguriert ist, die durch das Speichermodul gespeicherte Kurznachrichten-Anzeigeregeldatenbank zu dem Endgerät zu senden,
wobei der Anzeigestil zum Anzeigen des Inhalts der Kurznachricht in der Kurznachrichten-Anwendung des Endgerätes aus der Kurznachrichten-Anzeigeregeldatenbank gemäß einer Telefonnummer und eines Inhalts der Kurznachricht bestimmt wird und der Inhalt der Kurznachricht in der Kurznachrichten-Anwendung gemäß dem Anzeigestil angezeigt wird,
ein viertes Bestimmungsmodul, das dafür konfiguriert ist, eine erste Anzeigeregel zu bestimmen, die durch das Kurznachricht-sendende Endgerät in der Kurznachrichten-Anzeigeregeldatenbank bestimmt wird, und
ein fünftes Bestimmungsmodul, das dafür konfiguriert ist, Prioritäten des Inhalts der Kurznachricht und einer Telefonnummer des Kurznachricht-sendenden Endgerätes gemäß der ersten Anzeigeregel zu bestimmen, die durch das vierte Bestimmungsmodul bestimmt wird, wobei die erste Anzeigeregel durch das Kurznachricht-sendende Endgerät in der Kurznachrichten-Anzeigeregeldatenbank bestimmt wird.

11. System zum Anzeigen von Inhalt einer Kurznachricht, das einen Server und ein Endgerät umfasst, wobei
der Server dafür konfiguriert ist, einen speziellen Anzeigestil über den Inhalt der Kurznachricht zu empfangen, die von einem Kurznachricht-sendenden Endgerät zu dem Endgerät gesendet wurde, den speziellen Anzeigestil in einer Kurznachrichten-Anzeigeregeldatenbank zu speichern, und die Kurznachrichten-Anzeigeregeldatenbank zu dem Endgerät zu senden,
wobei der Server ferner konfiguriert ist zum:
Bestimmen einer ersten Anzeigeregel, die durch das Kurznachricht-sendende Endgerät in der Kurznachrichten-Anzeigeregeldatenbank bestimmt wird, und
Bestimmen von Prioritäten des Inhalts der Kurznachricht und einer Telefonnummer des Kurznachricht-sendenden Endgerätes gemäß der ersten Anzeigeregel, die durch das Kurznachricht-sendende Endgerät in der Kurznachrichten-Anzeigeregeldatenbank bestimmt wird,
wobei das Endgerät dafür konfiguriert ist, den Inhalt der Kurznachricht von dem Kurznachricht-sendenden Endgerät zu empfangen und eine Telefonnummer zu bestimmen, die dem Kurznachricht-sendenden Endgerät entspricht, einen Anzeigestil zum Anzeigen des Inhalts der Kurznachricht in einer Kurznachrichten-Anwendung des Endgerätes aus der Kurznachrichten-Anzeigeregeldatenbank gemäß der Telefonnummer und dem Inhalt der Kurznachricht zu bestimmen, den Inhalt der Kurznachricht in der Kurznachrichten-Anwendung gemäß dem Anzeigestil anzuzeigen,
wobei das Endgerät dafür konfiguriert ist, einen Anzeigestil zum Anzeigen des Inhalts der Kurznachricht in einer Kurznachrichten-Anwendung eines Endgerätes aus einer Kurznachrichten-Anzeigeregeldatenbank gemäß der Telefonnummer und dem Inhalt der Kurznachricht zu bestimmen durch:
Bestimmen von Prioritäten der Telefonnummer und des Inhalts der Kurznachricht für den Anzeigestil des Inhalts der Kurznachricht gemäß einer ersten Anzeigeregel in der Kurznachrichten-Anzeigeregeldatenbank, und
Bestimmen des Anzeigestils zum Anzeigen des Inhalts der Kurznachricht in der Kurznachrichten-Anwendung des Endgerätes gemäß den Prioritäten.

12. Computerprogramm, das Anweisungen enthält, um die Schritte eines Verfahrens zum Anzeigen von Inhalt einer Kurznachricht nach einem der Ansprüche 1 bis 6 auszuführen, wenn das Programm durch einen Computer ausgeführt wird.

13. Aufzeichnungsmedium, das durch einen Computer gelesen werden kann und auf dem ein Computerprogramm aufgezeichnet ist, das Anweisungen zum Ausführen der Schritte eines Verfahrens zum Anzeigen von Inhalt einer Kurznachricht nach einem der Ansprüche 1 bis 6 enthält.

## Revendications

1. Procédé d'affichage du contenu d'un message court, comprenant :
la réception (S101, S201, 5301) du contenu du message court en provenance d'un terminal de transmission de messages courts et la détermination d'un numéro de téléphone correspondant au terminal de transmission de messages courts ;
la détermination (S102) d'un style d'affichage pour l'affichage du contenu du message court dans une application de messages courts d'un terminal à partir d'une base de données de règles d'affichage de messages courts, selon le numéro de téléphone et le contenu du message court ; et
l'affichage (S103) du contenu du message court dans l'application de messages courts selon le style d'affichage ;
dans lequel l'étape de détermination (S102) d'un style d'affichage pour l'affichage du contenu du message court dans une application de messages courts d'un terminal à partir d'une base de données de règles d'affichage de messages courts, selon le numéro de téléphone et le contenu du message court, comprend :
la détermination de priorités du numéro de téléphone et du contenu du message court pour le style d'affichage du contenu du message court selon une première règle d'affichage dans la base de données de règles d'affichage de messages courts ; et
la détermination du style d'affichage pour l'affichage du contenu du message court dans l'application de messages courts du terminal selon les priorités.

2. Procédé selon la revendication 1, dans lequel si la priorité du contenu du message court est supérieure à celle du numéro de téléphone, l'étape de détermination du style d'affichage pour l'affichage du contenu du message court dans l'application de messages courts du terminal selon les priorités comprend :
l'identification (S202) de caractères consécutifs dans le contenu du message court selon une deuxième règle d'affichage dans la base de données de règles d'affichage de messages courts ; et
la détermination (S203) d'un style d'affichage pour l'affichage des caractères consécutifs comme étant un lien textuel dans l'application de messages courts du terminal.

3. Procédé selon la revendication 2, comprenant en outre :
la vérification (S204) de si un utilisateur a cliqué sur le lien textuel ; et
la détermination (S205) qu'il convient de sauter d'une interface utilisateur de l'application de messages courts à une première interface utilisateur correspondant au lien textuel s'il est vérifié que l'utilisateur a cliqué sur le lien textuel.

4. Procédé selon la revendication 1, dans lequel si la priorité du numéro de téléphone est supérieure à celle du contenu du message court, l'étape de détermination du style d'affichage pour l'affichage du contenu du message court dans l'application de messages courts du terminal selon les priorités comprend :
la détermination (S302) d'une troisième règle d'affichage déterminée par le terminal de transmission de messages courts correspondant au numéro de téléphone dans la base de données de règles d'affichage de messages courts ; et
la détermination (S303) d'un bouton associé au contenu du message court et affiché dans l'application de messages courts du terminal selon la troisième règle d'affichage déterminée par le terminal de transmission de messages courts correspondant au numéro de téléphone dans la base de données de règles d'affichage de messages courts.

5. Procédé selon la revendication 4, comprenant en outre :
la vérification (S304) de si un utilisateur a cliqué sur le bouton ; et
la détermination (S305) qu'il convient de sauter d'une interface utilisateur de l'application de messages courts à une seconde interface utilisateur correspondant au bouton s'il est vérifié que l'utilisateur a cliqué sur le bouton.

6. Procédé selon l'une quelconque des revendications 1 à 5, comprenant en outre :
la mise à jour de la base de données de règles d'affichage de messages courts s'il est déterminé que des styles d'affichage dans la base de données de règles d'affichage de messages courts sont mis à jour.

7. Procédé de détermination de l'affichage d'un message court, comprenant :
la réception (S401) d'un style d'affichage personnalisé concernant un contenu du message court envoyé à un terminal à partir d'un terminal de transmission de messages courts ;
le stockage (S402) du style d'affichage personnalisé dans une base de données de règles d'affichage de messages courts ; et
l'envoi (S403) de la base de données de règles d'affichage de messages courts au terminal ;
le style d'affichage pour l'affichage du contenu du message court dans l'application de messages courts du terminal étant déterminé à partir de la base de données de règles d'affichage de messages courts selon un numéro de téléphone et un contenu du message court, et le contenu du message court étant affiché dans l'application de messages courts selon le style d'affichage ;
le procédé de détermination comprenant en outre :
la détermination d'une première règle d'affichage déterminée par le terminal de transmission de messages courts dans la base de données de règles d'affichage de messages courts ; et
la détermination de priorités du contenu du message court et d'un numéro de téléphone du terminal de transmission de messages courts selon la première règle d'affichage déterminée par le terminal de transmission de messages courts dans la base de données de règles d'affichage de messages courts.

8. Procédé de détermination selon la revendication 7, comprenant en outre :
l'envoi d'une base de données de règles d'affichage de messages courts mise à jour au terminal si la base de données de règles d'affichage de messages courts est mise à jour.

9. Dispositif pour afficher un contenu d'un message court, comprenant :
un premier module de réception (61), configuré pour recevoir le contenu du message court en provenance d'un terminal de transmission de messages courts et pour déterminer un numéro de téléphone correspondant au terminal de transmission de messages courts ;
un premier module de détermination (62), configuré pour déterminer un style d'affichage pour l'affichage du contenu du message court dans une application de messages courts d'un terminal à partir d'une base de données de règles d'affichage de messages courts selon le numéro de téléphone déterminé par le premier module de réception et le contenu du message court reçu par le premier module de réception ; et
un module d'affichage (63), configuré pour afficher le contenu du message court dans l'application de messages courts selon le style d'affichage déterminé par le premier module de détermination ;
un premier sous-module de détermination, configuré pour déterminer des priorités du numéro de téléphone déterminé par le premier module de réception et du contenu du message court reçu par le premier module de réception pour le style d'affichage du contenu du message court selon une première règle d'affichage dans la base de données de règles d'affichage de messages courts ; et
un second sous-module de détermination, configuré pour déterminer le style d'affichage pour l'affichage du contenu du message court dans l'application de messages courts du terminal selon les priorités déterminées par le premier sous-module de détermination.

10. Dispositif pour déterminer un affichage d'un message court, comprenant :
un second module de réception (81), configuré pour recevoir un style d'affichage personnalisé concernant le contenu du message court envoyé à un terminal à partir d'un terminal de transmission de messages courts ;
un module de stockage (82), configuré pour stocker le style d'affichage personnalisé reçu par le second module de réception, dans une base de données de règles d'affichage de messages courts ; et
un module d'envoi (83), configuré pour envoyer la base de données de règles d'affichage de messages courts stockée par le module de stockage au terminal ;
le style d'affichage pour l'affichage du contenu du message court dans l'application de messages courts du terminal étant déterminé à partir de la base de données de règles d'affichage de messages courts selon un numéro de téléphone et un contenu du message court, et le contenu du message court étant affiché dans l'application de messages courts selon le style d'affichage ;
un quatrième module de détermination, configuré pour déterminer une première règle d'affichage déterminée par le terminal de transmission de messages courts dans la base de données de règles d'affichage de messages courts ; et
un cinquième module de détermination, configuré pour déterminer des priorités du contenu du message court et d'un numéro de téléphone du terminal de transmission de messages courts selon la première règle d'affichage déterminée par le quatrième module de détermination, dans lequel la première règle d'affichage est déterminée par le terminal de transmission de messages courts dans la base de données de règles d'affichage de messages courts.

11. Système pour afficher un contenu d'un message court, comprenant un serveur et un terminal, dans lequel
le serveur est configuré pour recevoir un style d'affichage personnalisé concernant le contenu du message court envoyé au terminal, à partir d'un terminal de transmission de messages courts ; pour stocker le style d'affichage personnalisé dans une base de données de règles d'affichage de messages courts ; pour envoyer la base de données de règles d'affichage de messages courts au terminal ;
le serveur est en outre configuré pour :
déterminer une première règle d'affichage déterminée par le terminal de transmission de messages courts dans la base de données de règles d'affichage de messages courts ; et
déterminer des priorités du contenu du message court et d'un numéro de téléphone du terminal de transmission de messages courts selon la première règle d'affichage déterminée par le terminal de transmission de messages courts dans la base de données de règles d'affichage de messages courts ;
le terminal est configuré pour recevoir le contenu du message court en provenance du terminal de transmission de messages courts et pour déterminer un numéro de téléphone correspondant au terminal de transmission de messages courts ; pour déterminer un style d'affichage pour l'affichage du contenu du message court dans une application de messages courts du terminal, à partir de la base de données de règles d'affichage de messages courts selon le numéro de téléphone et le contenu du message court ; et pour afficher le contenu du message court dans l'application de messages courts selon le style d'affichage ;
dans lequel le terminal est configuré pour déterminer un style d'affichage pour l'affichage du contenu du message court dans une application de messages courts d'un terminal à partir d'une base de données de règles d'affichage de messages courts selon le numéro de téléphone et le contenu du message court, en :
déterminant des priorités du numéro de téléphone et du contenu du message court pour le style d'affichage du contenu du message court selon une première règle d'affichage dans la base de données de règles d'affichage de messages courts ; et
déterminant le style d'affichage pour l'affichage du contenu du message court dans l'application de messages courts du terminal selon les priorités.

12. Programme informatique, incluant des instructions pour exécuter les étapes d'un procédé d'affichage de contenu d'un message court selon l'une quelconque des revendications 1 à 6, lorsque ledit programme est exécuté par un ordinateur.

13. Support d'enregistrement lisible par un ordinateur et sur lequel est enregistré un programme informatique incluant des instructions pour exécuter les étapes d'un procédé d'affichage de contenu d'un message court selon l'une quelconque des revendications 1 à 6.
